# FASCICULE DE BREVET EUROPEEN

(11) **EP 3 484 974 B1**
(45) Date de publication et mention de la délivrance du brevet: **11.03.2020**
(21) Numéro de dépôt: 17751795.0
(22) Date de dépôt: 11.07.2017
(51) Int. Cl.: C09J 175/06, B32B 7/12, B32B 15/095, C08G 18/79, C08G 18/42, C08G 18/10

(54) **COMPOSITION ADHESIVE BICOMPOSANTE A BASE DE POLYURETHANE**
ZWEI-KOMPONENTEN-KLEBSTOFFZUSAMMENSETZUNG AUF BASIS VON POLYURETHAN
ADHESIVE DUAL-COMPONENT COMPOSITION BASED ON POLYURETHANE

(30) Priorité: 12.07.2016 FR 1656653
(43) Date de publication de la demande: 22.05.2019
(73) Titulaire: Bostik SA, 92700 Colombes (FR)
(72) Inventeur: MICHAUD, Guillaume, 60200 Compiegne (FR)
(74) Mandataire: Chahine, Audrey Claire
(86) Numéro de dépôt international: PCT/FR2017/051902
(87) Numéro de publication internationale: WO 2018/011518

(56) Documents cités:
- EP-A1- 1 857 480
- FR-A1- 3 015 510
- US-A- 3 915 935
- US-A1- 2006 046 067

## Description

### DOMAINE DE L'INVENTION

La présente invention concerne une composition adhésive bicomposante à base de polyuréthane. L'invention concerne également une structure multicouche (ou complexe) comprenant au moins deux couches de matériau liées entre elle par une couche de la composition adhésive selon l'invention. Elle concerne également un procédé de complexage adapté à la fabrication de ladite structure multicouche, ainsi que l'utilisation d'une structure multicouche selon l'invention dans le domaine de l'emballage flexible, notamment pour la fabrication d'emballages flexibles destinés au conditionnement de produits alimentaires, cosmétiques, pharmaceutiques ou d'hygiène corporelle.

### ARRIERE-PLAN TECHNOLOGIQUE

Les emballages flexibles destinés au conditionnement des produits les plus divers, tels ceux fabriqués par les industries agroalimentaire, cosmétique ou de la détergence, sont généralement constitués de plusieurs couches (sous forme de feuilles ou de films) dont l'épaisseur est comprise entre 5 et 150 µm et qui sont constituées de différents matériaux comme le papier, un métal (par exemple l'aluminium) ou encore des polymères thermoplastiques. La structure multicouche correspondante, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité, aux gaz (O₂, N₂, CO₂, et leurs mélanges) et/ou à la lumière et aux rayons ultra-violet (UV),
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation ou de stérilisation. En particulier, le joint adhésif formé par réticulation de la couche adhésive reliant les couches individuelles de l'emballage doit conserver un niveau de cohésion suffisant après traitement thermique, afin d'éviter tout phénomène de délamination.

Pour constituer l'emballage final, le complexe est généralement mis en forme par thermoscellage, à une température variant d'environ 120 à 250 °C, cette dernière technique étant également utilisée pour la fermeture de l'emballage autour du produit destiné au consommateur.

Les diverses couches de matériau qui composent le complexe sont combinées ou assemblées par contrecollage au cours de procédés industriels de complexage (également dénommés par le terme "lamination").

Ces procédés mettent en œuvre des adhésifs (ou colles) et des dispositifs (ou machines) conçus à cet effet. Le complexe ainsi obtenu est souvent lui-même qualifié par le terme "laminé" et la composition adhésive employée à cet effet « adhésif de lamination ».

Ces procédés comprennent tout d'abord une étape d'enduction de la composition adhésive sur une première couche de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'une deuxième couche de matériau, identique ou différent de la première, consistant en l'application sous pression de cette deuxième couche de matériau sur la première couche de matériau recouverte de la couche de colle.

Les compositions adhésives bicomposantes à base de polyuréthane sont couramment utilisées pour ce type d'application.

Ces compositions sont fournies au complexeur sous la forme de 2 compositions (ou composants) :
- l'un (appelé composant -NCO) contenant des entités chimiques porteuses de groupements terminaux isocyanates, et
- l'autre (appelé composant -OH) contenant des entités chimiques porteuses de groupements terminaux hydroxyles.

Le mélange de ces 2 composants est réalisé à chaud à une température comprise entre 35 et 80 °C par l'opérateur de la machine de complexage, préalablement à sa mise en oeuvre et permet, grâce à une viscosité appropriée, le fonctionnement correct de celle-ci.

A l'issue de l'enduction du mélange ainsi obtenu et de l'opération de contrecollage, les groupements isocyanates du composant -NCO réagissent avec les groupements hydroxyle du composant -OH, selon une réaction dite de réticulation, pour former un polyuréthane qui se présente sous la forme d'un réseau tridimensionnel comportant des groupes uréthanes, assurant la cohésion du joint adhésif entre les 2 couches de matériau contrecollées.

Les structures multicouches obtenues après complexage sont généralement enroulées sous la forme de bobines appelées bobines mères, lesquelles sont ensuite généralement stockées à température ambiante ou dans une étuve afin d'assurer une réticulation suffisante de la couche adhésive.

L'opération de complexage est très souvent suivie par une opération de découpe de la structure multicouche composite qui est également réalisée par le complexeur, de manière à générer, à partir d'une bobine mère de ladite structure, plusieurs bobines filles de plus faible largeur, comprise par exemple entre 10 cm et 1 m.

Ces bobines filles sont destinées à être transportées et livrées aux divers industriels clients des complexeurs, qui les mettent en oeuvre directement sur leurs chaînes de conditionnement pour procéder à l'emballage de leurs propres produits, par exemple agroalimentaires, cosmétiques ou détergents, et destinés, notamment, au consommateur.

Les entités chimiques présentes dans le composant -NCO sont le plus souvent des composés chimiques polymériques porteuses de groupements terminaux isocyanates (souvent dénommés prépolymères car précurseurs du polyuréthane réticulé final constitutif du joint adhésif), lesquels sont généralement eux-mêmes des polyuréthanes produits par la réaction d'un excès stoechiométrique d'au moins un diisocyanate avec au moins un polyéther polyol et/ou polyester polyol.

Les entités chimiques présentes dans le composant -OH sont le plus souvent des composés polymériques ou non, parfois d'origine naturelle (comme l'huile de ricin), qui incluent généralement des polymères de type polyéther polyol et/ou polyester polyol, de masse moléculaire moyenne en nombre Mn (ou de masse molaire) allant de 400 à 4000 g/mol.

Toutefois, ces compositions adhésives bicomposantes à base de polyuréthane présentent en général l'inconvénient de mettre en œuvre un composant -NCO comprenant des teneurs résiduelles importantes en monomères diisocyanates provenant de la réaction de synthèse du prépolymère de polyuréthane porteur de groupements NCO (ou à terminaisons NCO). Ces monomères diisocyanates résiduels sont en effet susceptibles de conduire à un certain nombre d'effets indésirables.

On entend par « monomère diisocyanate », un composé hydrocarboné de faible masse molaire (inférieure à 700 g/mol) possédant deux groupes isocyanate. En particulier, on entend par « monomère diisocyanate aromatique », un monomère diisocyanate tel que défini précédemment, dans lequel l'un des groupes NCO est relié par une liaison covalente à un atome de carbone faisant parti d'un cycle hydrocarboné aromatique tel qu'un groupe phényle.

L'inconvénient des monomères diisocyanates aromatiques tels que le toluène diisocyanate (TDI) ou le diisocyanate de diphénylméthane (MDI), est qu'ils sont susceptibles de migrer à travers l'emballage, et de former par hydrolyse au contact de l'eau ou de l'humidité présente dans les aliments ou autres produits emballés, des amines aromatiques primaires, considérées comme toxiques.

Afin de tenir compte des effets indésirables liés à la présence de ces monomères diisocyanates aromatiques, la règlementation impose pour certains types de produits notamment dans le domaine alimentaire, un étiquetage particulier du produit, dès lors que la concentration en monomères diisocyanates aromatiques dépasse 0,1% en poids du poids du produit.

Pour pallier à ces inconvénients et répondre aux exigences sanitaires sus-mentionnées, une des solutions envisagée a été de réduire la teneur résiduelle en monomères diisocyanates aromatiques. Toutefois, les procédés mis en œuvre à cet effet sont contraignants.

Une autre solution a été de préparer le prépolymère de polyuréthane à terminaisons NCO à partir de monomère diisocyanate aliphatique, c'est-à-dire de monomère diisocyanate non aromatique et en particulier de monomère diisocyanate dans lequel aucun des groupes NCO n'est relié par une liaison covalente à un atome de carbone faisant parti d'un cycle hydrocarboné aromatique tel qu'un groupe phényle. En effet, les monomères diisocyanates aliphatiques ne présentent pas les inconvénients sus-cités. Toutefois, il est souhaitable de limiter également leur teneur car certains d'entre eux, tels que l'IPDI, peuvent également poser des problèmes de santé, étant classés comme sensibilisants.

La demande de brevet WO2006/026670 divulgue des compositions adhésives bicomposantes à base de polyuréthane comprenant dans un premier composant noté A une composition comprenant, en solvant, un prépolymère de polyuréthane obtenu par réaction d'un mélange d'IPDI et d'un triisocyanate isocyanurate d'IPDI avec un mélange d'un polyester diol 1 et 2 et de bisphénol A propoxylé, avec un aminosilane, et dans un deuxième composant noté B une composition comprenant, en solvant, au moins un polyester polyol ramifié et une résine époxydée issue de bisphénol A et d'épichlorhydrine.

La demande de brevet US3915935 A décrit une composition adhésive biocomposante comprenant un polyester polyol ayant une fonctionnalité -OH et un prépolymère d'un polyester polyol similaire et un polyisocyanate organique, le prépolymère ayant une fonctionnalité -NCO réactive d'environ deux à trois.

La demande de brevet FR 3015510 A1 décrit une composition adhésive réticulable à la chaleur et à l'humidité comprenant : a) de 40 à 60 % en poids d'au moins un polyuréthane susceptible d'être obtenu par réaction de polyaddition d'au moins un diisocyanate particulier avec au moins un polyéther diol à une température de réaction T1 inférieure à 95°C, dans des conditions anhydres, et dans des quantités de diisocyanate(s) et de polyéther diol(s) conduisant à un rapport molaire NCO/OH allant de 1,6 à 1,9 ; b) de 39 à 59 % en poids d'au moins une résine tackifiante compatible et c) de 0,01 à 1 % en poids d'au moins un catalyseur de réticulation.

La demande de brevet EP 1857480 A1 décrit une composition adhésive de polyuréthane à deux composants comprenant un premier composant d'un ou plusieurs polyols et un second composant d'un ou plusieurs isocyanates.

Toutefois, les compositions adhésives bicomposantes décrites dans ce document ne donnent pas entière satisfaction, et restent à améliorer sur un certain nombre de points, notamment au regard de leur performance adhésive, de leur tenue à la stérilisation, de leur innocuité, et de leur vitesse de réticulation.

En effet, ces compositions réticulent lentement et ne permettent pas d'atteindre rapidement les performances adhésives souhaitées, notamment dans le cas du collage de matériaux métalliques, ce qui oblige l'opérateur à placer les structures multicouches dans une étuve ou un four à 60°C, afin de réduire la durée de réticulation à un niveau acceptable.

En particulier, les compositions adhésives bicomposantes décrites ne permettent pas de fabriquer rapidement des structures multicouches présentant un niveau de cohésion élevé, tel que souhaité dans certains types d'applications ou de procédés.

En particulier, lorsqu'on souhaite transformer ou traiter les structures multicouches obtenues, par exemple par une opération de découpe, de thermoscellage, suivi d'un éventuel traitement de pasteurisation ou stérilisation, l'opérateur doit attendre que la structure multicouche présente un niveau de cohésion suffisant avant de pouvoir opérer, sous peine d'obtenir une découpe imparfaite et/ou l'obtention d'un emballage non conforme.

En outre, les structures multicouches décrites, obtenues avec les compositions de l'art antérieur, présentent, après stérilisation, des signes de dégradation du joint adhésif se traduisant notamment par une perte significative de cohésion du joint adhésif, au-delà de 30% par rapport à sa valeur initiale mesurée avant stérilisation.

Par ailleurs, l'utilisation de quantité importante de solvant dans les compositions adhésives est peu souhaitée, car cela conduit à un procédé de complexage de faible cadence, peu compacte, et potentiellement plus dangereux dans le cas de solvant inflammable et volatil.

Ainsi, il existe un besoin de mettre au point une composition adhésive à base de polyuréthane ne présentant pas les inconvénients de l'art antérieur sus-cité.

Le but de la présente invention est de fournir une composition adhésive à base de polyuréthane, substantiellement voire totalement exempte de monomères diisocyanate aromatique et/ou aliphatique, convenant la production à haut rendement de structures multicouches utilisables pour la fabrication d'emballages flexibles.

En particulier, on cherche à mettre au point une composition adhésive à base de polyuréthane qui présente une vitesse de réticulation satisfaisante à température ambiante (23°C), permettant de produire rapidement (en moins de 5 jours) des complexes avec un excellent niveau de cohésion.

En particulier, on cherche à mettre au point une composition adhésive à base de polyuréthane qui présente une meilleure tenue thermique, en particulier qui présente un meilleur comportement vis-à-vis du test de pasteurisation et/ou stérilisation.

En particulier, on cherche à mettre au point une composition adhésive à base de polyuréthane convenant à la fabrication d'un large éventail de structures multicouche, notamment celles comprenant au moins une couche de matériau métallique, et utilisables pour la fabrication d'emballages flexibles.

En particulier, on cherche à mettre au point une composition adhésive à base de polyuréthane pouvant être mise en œuvre avec une teneur réduite en solvant (de préférence inférieure à 45% en poids du poids totale de la composition adhésive).

En particulier, on cherche à mettre au point une composition adhésive à base de polyuréthane simple à préparer par mélange de ses composants à température ambiante (23°C), et facile à mettre en œuvre par un procédé industriel de complexage classique, sans qu'il soit nécessaire d'accélérer la réaction de réticulation de la couche adhésive par chauffage.

Il a maintenant été trouvé que la composition adhésive objet de la présente demande permettait de répondre à ses besoins.

En particulier, la composition adhésive selon l'invention permet de fabriquer avec un niveau de cohésion satisfaisant une structure multicouche convenant à la fabrication d'emballage flexible et capable de résister à un traitement thermique à haute température allant de 60°C à 135°C, tel qu'une pasteurisation (70°C à 99°C) et mieux encore une stérilisation (100°C à 135°C).

En particulier, la composition adhésive selon l'invention permet de fabriquer avec excellent un niveau de cohésion, différents types de laminés utilisables pour la fabrication d'emballages flexibles, y compris ceux à base de matériaux métalliques.

En particulier, la composition adhésive selon l'invention peut être mise en œuvre avec une teneur en solvant inférieure ou égale à 45% en poids du poids de la composition adhésive. En particulier, le composant -NCO utilisé selon l'invention peut comprendre une teneur réduite en solvant tout en présentant une viscosité satisfaisante pour être mélangé à température ambiante.

En particulier, la composition adhésive selon l'invention réticule rapidement à température ambiante après mélange des composants -NCO et -OH, et permet donc de produire avec des vitesses de lignes élevées des structures multicouches avec un excellent niveau de cohésion.

En particulier, la composition adhésive selon l'invention satisfait aux exigences sanitaires requises pour être utilisée pour fabriquer des structures multicouches destinées à l'emballage et au conditionnement de produits alimentaires, cosmétiques, pharmaceutiques ou d'hygiène corporelle.

En particulier, la composition adhésive selon l'invention présente une viscosité adaptée à température ambiante et est suffisamment stable pour être mise en œuvre dans des procédés industriels de complexage classiques.

Le niveau de cohésion et la tenue thermique des compositions adhésives peuvent être évalués de manière bien connue de l'homme du métier, tel qu'illustré dans les exemples.

### RESUME DE L'INVENTION

Un premier objet de l'invention concerne une composition adhésive bicomposante à base de polyuréthane comprenant un composant -NCO et un composant -OH tels que :
- le composant -NCO est une composition comprenant :
   A) au moins un prépolymère de polyuréthane comportant au moins deux groupements terminaux NCO obtenu par réaction de polyaddition :
      - d'au moins un polyisocyanate aliphatique choisi parmi les monomères diisocyanates aliphatiques et les mélanges d'au moins un monomère diisocyanate aliphatique avec au moins un triisocyanate à base de XDI, et
      - d'au moins un polyester diol,
   B) au moins un triisocyanate à base de XDI, et
- le composant -OH est une composition comprenant au moins un polyester polyol.

Selon un mode de réalisation, le(s) monomère(s) diisocyanate(s) aliphatique(s) est (sont) choisi(s) parmi :
- le xylylène diisocyanate (XDI),
- les monomère diisocyanates aliphatiques différents du XDI,
et leurs mélanges.

Selon un mode de réalisation, la quantité de monomère(s) diisocyanate(s) aliphatique(s) par rapport à la quantité de polyester diol(s) est telle que le rapport molaire NCO/OH, noté r₁, va de 1,0 à 2,2, de préférence de 1,2 à 2,0.

Ce rapport r₁ correspond au rapport du nombre de groupes NCO (présents dans la quantité totale de monomère(s) diisocyanate(s) aliphatique(s) utilisé(s) pour synthétiser le prépolymère de polyuréthane à terminaisons NCO) sur le nombre de groupes OH (présents dans la quantité totale de diol(s) utilisé(s) pour synthétiser le prépolymère de polyuréthane à terminaisons NCO).

Selon un mode de réalisation, le monomère diisocyanate aliphatique utilisé pour préparer le prépolymère de polyuréthane à terminaisons NCO est un mélange de monomères diisocyanates aliphatiques comprenant au moins le XDI, de préférence au moins 50% en poids de XDI par rapport au poids dudit mélange, ce dernier pouvant être sous la forme d'un isomère pur du XDI, ou sous la forme d'un mélange d'isomères du XDI.

Selon un mode de réalisation préféré, le monomère diisocyanate aliphatique utilisé pour préparer le prépolymère de polyuréthane à terminaisons NCO est le XDI, celui-ci pouvant être sous la forme d'un isomère pur, tel que le méta-xylylène diisocyanate (m-XDI), ou sous la forme d'un mélange d'isomères de XDI.

Selon un mode de réalisation, le rapport molaire du nombre de groupes NCO présents dans la quantité totale de monomère(s) diisocyanate(s) aliphatique(s) utilisé(s) pour synthétiser le prépolymère de polyuréthane à terminaisons NCO A) sur le nombre de groupes NCO présents dans la quantité totale de triisocyanate(s) à base de XDI, noté r₂, va de 3 à 11, de préférence de 5 à 11.

Selon un mode de réalisation, la réaction de polyaddition a lieu en présence ou non d'au moins un catalyseur de réaction, à une température de réaction T1 inférieure à 95°C et de préférence allant de 65°C à 80°C, dans des conditions anhydres.

Selon un mode de réalisation préféré, le(s) triisocyanate(s) à base de XDI est (sont) choisi(s) parmi les isocyanurates du XDI, les biurets du XDI, les adduits de XDI et de triols, et leurs mélanges.

Selon un mode de réalisation, le composant -NCO comprend une teneur en monomère(s) diisocyanate(s) aliphatique(s) inférieure ou égale à 0,5% en poids par rapport au poids du composant -NCO.

Selon un mode de réalisation, le(s) polyester diol(s) et/ou polyester polyol(s) possède(nt) une masse molaire moyenne en nombre allant de 1000 à 4000 g/mol.

Selon un mode de réalisation, les composants -NCO et -OH, destinés à être mélangés, sont présents dans la composition adhésive bicomposante selon l'invention, dans des quantités telles que le rapport molaire NCO/OH noté r₃, va de 2 à 15, plus préférentiellement de 6 à 11.

Ce rapport r₃ correspond au rapport du nombre de groupes NCO présents dans la quantité totale de composant NCO destiné à être mélangé sur le nombre de groupes OH présents dans la quantité totale de composant OH destiné à être mélangé.

L'invention a également pour objet une structure multicouche comprenant au moins deux couches de matériau liées entre elles par une couche adhésive, caractérisé en ce que ladite couche adhésive est constituée par la composition adhésive selon l'invention à l'état réticulé.

Selon un mode de réalisation, la structure multicouche selon l'invention comprend au moins une couche de matériau à base d'aluminium.

L'invention a également pour objet un procédé de fabrication d'une structure multicouche selon l'invention, comprenant les étapes suivantes :
(i) le mélange des composants -NCO et -OH de la composition adhésive bicomposante selon l'invention, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange.

Selon un mode de réalisation du procédé de fabrication, le mélange du composant -NCO et du composant -OH comprend au moins un solvant et le procédé comprend en outre une étape d'évaporation du ou des solvants.

L'invention a également pour objet l'utilisation d'une structure multicouche selon l'invention pour la fabrication d'emballages flexibles, et en particulier d'emballages flexibles, thermoscellables, stérilisables et/ou pasteurisables.

D'autres objets et caractéristiques de la présente invention apparaîtront plus clairement à la lecture de la description et des exemples.

### EXPOSE DETAILLE DES MODES DE REALISATION DE L'INVENTION

Dans la présente demande, en l'absence d'indication contraire :
- les quantités exprimées sous la forme de pourcentage correspondent à des pourcentages poids/poids ;
- les masses moléculaires moyennes en nombre (Mn), exprimées en gramme par mole (g/mol) sont déterminées par calcul par l'analyse de la teneur en groupes terminaux (NCO ou OH) exprimée en milliéquivalent par gramme (méq/g) et la fonctionnalité (nombre de groupe NCO ou OH par mole) de l'entité considérée (prépolymère de polyuréthane à terminaisons NCO, polyester diol ou polyester polyol) ;
- l'indice hydroxyle d'un polyester polyol (noté IOH) représente le nombre de fonctions hydroxyles par gramme de polyester polyol et est exprimé dans le texte de la présente demande sous la forme du nombre équivalent de milligrammes de potasse (KOH) utilisés dans le dosage des fonctions hydroxyles. L'IOH peut être mesuré expérimentalement par exemple selon la norme ISO 14900 :2001. Dans le cas d'un mélange de polyester polyols, l'IOH peut également être calculé à partir des IOH connus de chacun des polyester polyols et de leur teneur pondérale respective dans ledit mélange.
- la teneur en monomère diisocyanate est mesurée selon la méthode d'analyse suivante reposant sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254 nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue.
- la viscosité peut être mesurée à l'aide d'un viscosimètre Brookfield.
- les différents modes de réalisations décrits dans la présente demande peuvent être combinés entre eux.

### Composition adhésive bicomposante :

La présente invention concerne une composition adhésive bicomposante à base de polyuréthane comprenant un composant -NCO et un composant -OH tels que :
   - le composant -NCO est une composition comprenant :
      A) au moins un prépolymère de polyuréthane comportant au moins deux groupements terminaux NCO obtenu par réaction de polyaddition :
         - d'au moins un polyisocyanate aliphatique choisi parmi les monomères diisocyanates aliphatiques et leur mélange avec au moins un triisocyanate à base de XDI, et
         - d'au moins un polyester diol,
      B) au moins un triisocyanate à base de XDI, et
   - le composant -OH est une composition comprenant au moins un polyester polyol.

### Composant -NCO :

Le composant -NCO comprend au moins un prépolymère de polyuréthane à terminaisons NCO A) obtenu par réaction de polyaddition :
- d'au moins un polyisocyanate aliphatique choisi parmi les monomères diisocyanates aliphatiques et leur mélange avec au moins un triisocyanate à base de XDI, et
- d'au moins un polyester diol.

Le(s) monomère(s) diisocyanate(s) aliphatique(s) utilisable(s) pour préparer le prépolymère de polyuréthane à terminaisons NCO A) utilisé selon l'invention peu(ven)t être choisi(s) parmi les diisocyanates suivants, et leur mélange :
- Hexaméthylène diisocyanate (HDI),
- Heptane diisocyanate,
- Octane diisocyanate,
- Nonane diisocyanate,
- Décane diisocyanate,
- Undécane diisocyanate,
- Dodécane diisocyanate,
- Allophanate de HDI, tel que défini dans la demande FR3015510, incorporé par référence dans la présente demande,
- Méthylène bis(4-cyclohexylisocyanate) (HMDI),
- Isophorone diisocyanate (IPDI),
- Norbornane diisocyanate,
- Norbornène diisocyanate,
- 1,4-cyclohexane diisocyanate (CHDI),
- Méthylcyclohexane diisocyanate,
- Ethylcyclohexane diisocyanate,
- Propylcyclohexane diisocyanate,
- Méthyldiéthylcyclohexane diisocyanate,
- Cyclohexane diméthylène diisocyanate,
- 1,5-diisocyanato-2-méthylpentane (MPDI),
- 1,6-diisocyanato-2,4,4-triméthylhexane,
- 1,6-diisocyanato-2,2,4-triméthylhexane (TMDI),
- 4-isocyanatomethyl-1,8-octane diisocyanate (TIN),
- (2,5)-bis(isocyanatométhyl)bicyclo[2.2.1]heptane (2,5-NBDI),
- (2,6)-bis(isocyanatométhyl)bicyclo[2.2.1]heptane (2,6-NBDI),
- 1,3-bis(isocyanatomethyl)cyclohexane (1,3-H6-XDI),
- 1,4-bis(isocyanatomethyl)-cyclohexane (1,4-H6-XDI),
- xylylène-diisocyanate (XDI), en particulier le m-xylylène diisocyanate (m-XDI).

Le(s) monomère(s) diisocyanate(s) aliphatique(s) utilisable(s) pour préparer le prépolymère de polyuréthane à terminaisons NCO A) utilisé selon l'invention peu(ven)t être choisi(s) parmi les diisocyanates suivants, et leur mélange :
- Hexaméthylène diisocyanate (HDI),
- Heptane diisocyanate,
- Octane diisocyanate,
- Nonane diisocyanate,
- Décane diisocyanate,
- Undécane diisocyanate,
- Dodécane diisocyanate,
- Allophanate de HDI, tel que défini dans la demande FR3015510, incorporé par référence dans la présente demande,
- Méthylène bis(4-cyclohexylisocyanate) (HMDI),
- Isophorone diisocyanate (IPDI),
- Norbornane diisocyanate,
- Norbornène diisocyanate,
- 1,4-cyclohexane diisocyanate (CHDI),
- Méthylcyclohexane diisocyanate,
- Ethylcyclohexane diisocyanate,
- Propylcyclohexane diisocyanate,
- Méthyldiéthylcyclohexane diisocyanate,
- Cyclohexane diméthylène diisocyanate,
- 1,5-diisocyanato-2-méthylpentane (MPDI),
- 1,6-diisocyanato-2,4,4-triméthylhexane,
- 1,6-diisocyanato-2,2,4-triméthylhexane (TMDI),
- 4-isocyanatomethyl-1,8-octane diisocyanate (TIN),
- (2,5)-bis(isocyanatométhyl)bicyclo[2.2.1]heptane (2,5-NBDI),
- (2,6)-bis(isocyanatométhyl)bicyclo[2.2.1]heptane (2,6-NBDI),
- 1,3-bis(isocyanatomethyl)cyclohexane (1,3-H6-XDI),
- 1,4-bis(isocyanatomethyl)-cyclohexane (1,4-H6-XDI).

De préférence, le(s) monomère(s) diisocyanate(s) aliphatique(s) utilisable(s) pour préparer le prépolymère de polyuréthane à terminaisons NCO A) utilisé selon l'invention peu(ven)t être choisi(s) parmi les diisocyanates suivants, et leur mélange :
- Allophanate de HDI, tel que défini dans la demande FR3015510, incorporé par référence dans la présente demande,
- Méthylène bis(4-cyclohexylisocyanate) (HMDI),
- Isophorone diisocyanate (IPDI),
- 1,5-diisocyanato-2-methylpentane (MPDI),
- 1,3-bis(isocyanatométhyl)cyclohexane (1,3-H6-XDI),
- 1,4-bis(isocyanatométhyl)-cyclohexane (1,4-H6-XDI),
- xylylène diisocyanate (XDI), en particulier le m-xylylène diisocyanate (m-XDI).

Selon un mode de réalisation, le(s) monomère(s) diisocyanate(s) aliphatique(s) utilisé(s) pour préparer le prépolymère de polyuréthane à terminaisons NCO est (sont) choisi(s) parmi le xylylène diisocyanate (XDI) et/ou les monomères diisocyanates aliphatiques différents du XDI, tels que l'isophorone diisocyanate (IPDI).

Selon un mode de réalisation, le(s) monomère(s) diisocyanate(s) aliphatique(s) utilisé(s) pour préparer le prépolymère de polyuréthane à terminaisons NCO est (sont) choisi(s) parmi le xylylène diisocyanate (XDI) et/ou les monomères diisocyanates aliphatiques différents du XDI, tels que par exemple ceux susmentionnés, en particulier l'isophorone diisocyanate (IPDI) ou le méthylène bis(4-cyclohexylisocyanate) (HMDI).

Selon un mode de réalisation, le(s) monomère(s) diisocyanate(s) aliphatique(s) utilisé(s) pour préparer le prépolymère de polyuréthane à terminaisons NCO est (sont) choisi(s) parmi le méthylène bis(4-cyclohexylisocyanate) (HMDI), et/ou les monomères diisocyanates aliphatiques différents du HMDI, tels que par exemple ceux susmentionnés, en particulier l'isophorone diisocyanate (IPDI).

Selon un mode de réalisation, le monomère diisocyanate aliphatique utilisé pour préparer le prépolymère de polyuréthane à terminaisons NCO est un mélange de monomères diisocyanates aliphatiques comprenant de 0 à 100% en poids de XDI, de préférence au moins 50% en poids de XDI, par rapport au poids dudit mélange, ledit XDI pouvant être sous la forme d'un isomère pur du XDI (tel que par exemple le méta-xylylène diisocyanate), ou sous la forme d'un mélange d'isomères du XDI.

Selon un mode de réalisation préféré, le monomère diisocyanate aliphatique utilisé pour préparer le prépolymère de polyuréthane à terminaisons NCO est le XDI, celui-ci pouvant être sous la forme d'un isomère pur, tel que le méta-xylylène diisocyanate (m-XDI), ou sous la forme d'un mélange d'isomères de XDI.

Selon un mode de réalisation préféré, le monomère diisocyanate aliphatique utilisé pour préparer le prépolymère de polyuréthane à terminaisons NCO est le méthylène bis(4-cyclohexylisocyanate) (HMDI).

En particulier, le(s) monomère(s) diisocyanate(s) aliphatique(s) peu(ven)t être utilisé(s) sous la forme d'une composition de diisocyanates aliphatiques comprenant au moins 90% en poids, et de préférence au moins 95% en poids par rapport au poids de ladite composition, d'un monomère diisocyanate aliphatique.

Le(s) monomère(s) diisocyanate(s) aliphatique(s) utilisable(s) pour préparer le prépolymère de polyuréthane à terminaisons NCO A) utilisé selon l'invention est (sont) disponible(s) dans le commerce.

Le(s) polyester diol(s) utilisable(s) pour préparer le prépolymère de polyuréthane à terminaisons NCO A) utilisé selon l'invention peu(ven)t être choisi(s) parmi ceux dont la masse moléculaire moyenne en nombre Mn est inférieure ou égale à 4000 g/mol, de préférence parmi ceux dont la masse moléculaire moyenne en nombre Mn va de 1000 à 4000 g/mol.

De préférence, le(s) polyester diol(s) utilisable(s) pour préparer le prépolymère de polyuréthane à terminaisons NCO A) utilisé selon l'invention présente(nt) un indice hydroxyle (IOH) allant de 28 à 112 mg KOH/g, de préférence allant de 28 à 90 mg KOH/g, préférentiellement allant de 30 à 85 mg KOH/g, avantageusement allant de 34 à 85 mg KOH/g.

Le(s) polyester diol(s) utilisable(s) pour préparer le prépolymère de polyuréthane à terminaisons NCO A) utilisé selon l'invention peu(ven)t être choisi(s) parmi :
- des polyester diols issus de la polycondensation d'au moins un diacide carboxylique ou d'au moins un de ses anhydrides ou diesters correspondants, avec au moins un diol,
- des polyester diols issus d'une polymérisation avec ouverture de cycle d'au moins une lactone cyclique avec au moins diol, tels que les polycaprolactone polyols.

Le(s) diacide(s) carboxylique(s) utilisable(s) pour la synthèse des polyester diols sus-cités sont linéaire(s) ou ramifié(s), cyclique(s) ou acyclique(s), saturé(s) ou insaturé(s), aromatique(s) ou aliphatique(s), et comprennent de préférence de 3 à 40 atomes de carbone, et plus préférentiellement de 6 à 10 atomes de carbone.

Le(s) diol(s) utilisable(s) pour la synthèse des polyester diols sus-cités peu(ven)t être choisi(s) parmi les polyalkylène diols, les polyoxyalkylène-diols, et les mélanges de ces composés, la partie alkylène (saturée) de ces composés, étant de préférence linéaire ou ramifiée, et comprenant de préférence de 2 à 40 atomes de carbone, et plus préférentiellement de 2 à 8 atomes de carbone.

Le(s) lactone(s) cyclique(s) utilisable(s) pour la synthèse des polyester diols sus-cités comprennent de préférence de 3 à 7 atomes de carbone.

Selon un mode de réalisation, on utilise un mélange d'au moins deux, et de préférence de deux, polyester diol(s) pour préparer le prépolymère de polyuréthane à terminaisons NCO A) utilisé selon l'invention.

Le(s) polyester diol(s) utilisable(s) pour préparer le prépolymère de polyuréthane à terminaisons NCO A) utilisé selon l'invention peu(ven)t être préparé(s) de manière conventionnelle, et/ou est (sont) largement disponible(s) dans le commerce comme illustré dans les exemples.

Le(s) polyester diol(s) utilisable(s) pour préparer le prépolymère de polyuréthane à terminaisons NCO A) utilisé selon l'invention peu(ven)t être utilisé(s) comme polyester polyol(s) utilisable(s) dans le composant -OH.

Le(s) triisocyanate(s) à base de XDI utilisable(s) pour préparer le prépolymère de polyuréthane à terminaisons NCO A) utilisé selon l'invention ou entrant dans la composition du composant -NCO est (sont) choisi(s) de préférence parmi les isocyanurates de XDI, les biurets de XDI, les adduits de XDI et de triols, et leurs mélanges.

En particulier, le(s) isocyanurate(s) de XDI peuvent être utilisé(s) sous la forme d'une composition de (poly)isocyanurate(s) de XDI comprenant au moins 70% en poids en isocyanurate(s) de XDI par rapport au poids de ladite composition.

De préférence, le(s) isocyanurate(s) de diisocyanate utilisable(s) selon l'invention répond(ent) à la formule générale (I) suivante : 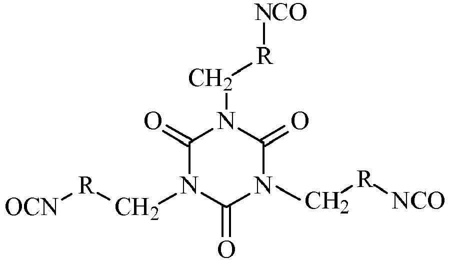 dans laquelle R représente :
- le radical divalent dérivé du xylylène diisocyanate (tel que le m-XDI) :

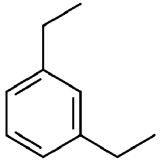

A titre de triols utilisables pour préparer les adduits de XDI et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de XDI et de triols utilisables selon l'invention, on peut citer l'adduit de méta-xylylène diisocyanate et de triméthylolpropane, tel que représenté ci-dessous.

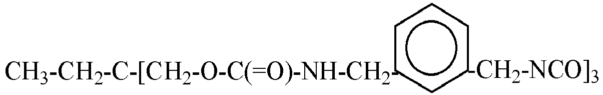

Lorsque le prépolymère de polyuréthane à terminaisons NCO A) est obtenu entre autre à partir de triisocyanate(s) à base de XDI tel qu'envisagé précédemment, celui-ci (ceux-ci) sont de préférence identiques aux triisocyanate(s) à base de XDI B) entrant dans la composition du composant -NCO.

De préférence, on utilise un seul triisocyanate à base de XDI pour préparer le prépolymère de polyuréthane à terminaisons NCO A).

Le(s) triisocyanate(s) à base de XDI utilisable(s) selon l'invention est (sont) disponible(s) dans le commerce.

Le prépolymère de polyuréthane comportant au moins deux groupements terminaux NCO A) est obtenu de préférence par réaction de polyaddition d'au moins un monomère diisocyanate aliphatique et d'au moins un polyester diol, en présence ou non d'au moins triisocyanate à base de XDI, la quantité de monomère diisocyanate aliphatique(s) étant en excès stoechiométrique par rapport à la quantité de polyester diol(s).

De préférence, les quantités en monomère(s) diisocyanate(s) aliphatique(s) et en polyester diol(s) utilisés pour la synthèse du prépolymère de polyuréthane à terminaisons NCO A) sont telles que le rapport molaire NCO/OH, noté r₁, va de va de 1,0 à 2,2, de préférence de 1,2 à 2,0.

Les quantités pondérales de monomère(s) diisocyanate(s) aliphatique(s) et de polyester diol(s) à charger dans le réacteur sont déterminées sur la base de ce rapport ainsi que l'indice d'hydroxyle IOH du polyester diol ou mélange de polyester diols, mesuré expérimentalement ou calculé à partir des IOH des polyester diols présents et de leur teneur pondérale respective dans ledit mélange.

Selon un mode de réalisation préféré, le prépolymère de polyuréthane comportant au moins deux groupements terminaux NCO A) est obtenu par réaction de polyaddition d'au moins un monomère diisocyanate aliphatique et d'au moins un polyester diol, en présence d'au moins un triisocyanate à base de XDI, la quantité de monomère diisocyanate aliphatique(s) étant en excès stoechiométrique par rapport à la quantité de polyester diol(s).

Selon une première variante de ce mode de réalisation, au moins un monomère diisocyanate aliphatique est mis à réagir avec au moins un polyester diol, puis ledit mélange est mis à réagir avec au moins un triisocyanate à base de XDI.

Selon une deuxième variante de ce mode de réalisation, lorsque le prépolymère de polyuréthane comportant au moins deux groupements terminaux NCO A) est obtenu à partir de plusieurs polyester diols, au moins un monomère diisocyanate aliphatique est mis à réagir avec au moins un premier polyester diol, puis ledit mélange est mis à réagir avec au moins un triisocyanate à base de XDI, puis le mélange obtenu peut être mis à réagir avec au moins un second polyester diol, identique ou différent du (des) premier(s) polyester diol(s).

Les quantités de monomère(s) diisocyanate(s) aliphatique(s) utilisé(s) pour la synthèse du prépolymère de polyuréthane à terminaisons NCO A) et de triisocyanate(s) à base de XDI sont telles que le rapport r₂, va de préférence de 3 à 11, préférentiellement de 5 à 11.

Ce rapport r₂ correspond au rapport du nombre de groupes NCO présents dans la quantité totale de monomère(s) diisocyanate(s) utilisé(s) pour la synthèse du prépolymère de polyuréthane à terminaisons NCO A) sur le nombre de groupes NCO présents dans la quantité totale de triisocyanate(s) présent(s) dans le composant -NCO et éventuellement utilisé(s) pour la synthèse du prépolymère de polyuréthane à terminaisons NCO A).

Le prépolymère de polyuréthane à terminaisons NCO A) tel que défini précédemment peut être préparé en présence ou non d'au moins un catalyseur de réaction, à une température de réaction T1 inférieure à 95°C et de préférence allant de 65°C à 80°C, dans des conditions anhydres.

Le prépolymère de polyuréthane à terminaisons NCO A) tel que défini précédemment peut être préparé en présence de solvant organique.

Le composant -NCO peut comprendre en outre au moins un solvant organique, de préférence en une quantité allant de 5 à 55% en poids, plus préférentiellement allant de 15 à 45% en poids, par rapport au poids total du composant -NCO.

Le solvant organique peut être choisi parmi l'acétate d'éthyle, le n-butyle acétate, la méthyl éthyl cétone, le xylylène, le tétrahydrofurane, le méthyl-tétrahydrofurane, ou encore parmi l'Isane® (à base d'isoparaffines, disponible auprès de la société Total) ou l'Exxol® D80 (à base d'hydrocarbures aliphatiques, disponible auprès de la société ExxonMobil Chemical).

Selon un mode de réalisation, le composant -NCO possède une viscosité mesurée à température ambiante (23°C) allant de 500 à 5000 mPa.s, de préférence allant de 600 à 2000 mPa.s.

Le composant -NCO obtenu peut comprendre une teneur en monomère(s) diisocyanate(s) aliphatique(s) inférieure ou égale à 0,5% en poids par rapport au poids du composant -NCO.

La teneur en groupes NCO dans le composant -NCO va de préférence de 40 à 125 milliéquivalents de groupes NCO pour 100 grammes (noté méq NCO/100g) d'extrait sec de composant -NCO, préférentiellement de 60 à 100 méq NCO/100g d'extrait sec de composant - NCO.

Le composant -NCO peut être préparé par simple mélange de ses ingrédients ou selon un mode de réalisation préféré, par un procédé de préparation comprenant :
- dans une première étape El, le mélange d'au moins un monomère diisocyanate aliphatique et d'au moins un polyester diol, puis
- dans une deuxième étape E2, l'introduction d'au moins un triisocyanate à base de XDI dans le mélange de la première étape,
- la quantité de monomère diisocyanate aliphatique(s) étant en excès stoechiométrique par rapport à la quantité de polyester diol(s),
- de préférence les quantités de monomère(s) diisocyanate(s) aliphatique(s) utilisé(s) pour la synthèse du prépolymère de polyuréthane à terminaisons NCO A) et de triisocyanate(s) à base de XDI étant telles que le rapport du nombre de groupes NCO présents dans la quantité totale de monomère(s) diisocyanate(s) aliphatique(s) utilisé(s) sur le nombre de groupes NCO présents dans la quantité totale de triisocyanate(s) à base de XDI, noté r₂, va de 3 à 11, plus préférentiellement de 5 à 11,
- de préférence en présence d'au moins un catalyseur de réaction et d'au moins un solvant, à une température de réaction T1 inférieure à 95°C et plus préférentiellement allant de 65°C à 80°C, dans des conditions anhydres.

L'introduction de triisocyanate à base de XDI après obtention d'un prépolymère de polyuréthane à terminaisons NCO à l'étape El, permet avantageusement d'obtenir un composant -NCO substantiellement exempt de monomère diisocyanate aliphatique résiduel et de faible une viscosité à température ambiante.

Lorsque le prépolymère de polyuréthane comportant au moins deux groupements terminaux NCO A) est préparé à partir de plusieurs polyester diols, au moins un polyester diol peut être introduit à l'étape El et au moins un polyester diol peut être introduit ultérieurement par exemple dans une troisième étape E3 suivant l'introduction du (des) triisocyanate à base de XDI dans le mélange.

Selon un mode de réalisation préféré, le composant -NCO est une composition comprenant :
A) au moins un prépolymère de polyuréthane comportant au moins deux groupements terminaux NCO obtenu par réaction de polyaddition :
   - d'au moins un monomère diisocyanate choisi dans le groupe constitué des diisocyanates suivants :
      - Hexaméthylène diisocyanate (HDI),
      - Heptane diisocyanate,
      - Octane diisocyanate,
      - Nonane diisocyanate,
      - Décane diisocyanate,
      - Undécane diisocyanate,
      - Dodécane diisocyanate,
      - Allophanate de HDI, tel que défini dans la demande FR3015510, incorporé par référence dans la présente demande,
      - Méthylène bis(4-cyclohexylisocyanate) (HMDI),
      - Isophorone diisocyanate (IPDI),
      - Norbornane diisocyanate,
      - Norbornène diisocyanate,
      - 1,4-cyclohexane diisocyanate (CHDI),
      - Méthylcyclohexane diisocyanate,
      - Ethylcyclohexane diisocyanate,
      - Propylcyclohexane diisocyanate,
      - Méthyldiéthylcyclohexane diisocyanate,
      - Cyclohexane diméthylène diisocyanate,
      - 1,5-diisocyanato-2-méthylpentane (MPDI),
      - 1,6-diisocyanato-2,4,4-triméthylhexane,
      - 1,6-diisocyanato-2,2,4-triméthylhexane (TMDI),
      - 4-isocyanatomethyl-1,8-octane diisocyanate (TIN),
      - (2,5)-bis(isocyanatométhyl)bicyclo[2.2.1]heptane (2,5-NBDI),
      - (2,6)-bis(isocyanatométhyl)bicyclo[2.2.1]heptane (2,6-NBDI),
      - 1,3-bis(isocyanatométhyl)cyclohexane (1,3-H6-XDI),
      - 1,4-bis(isocyanatométhyl)-cyclohexane (1,4-H6-XDI),
      - le xylylène-diisocyanate, en particulier le m-xylylène diisocyanate, et
      - leurs mélanges ;
      ledit monomère diisocyanate étant de préférence le xylylène-diisocyanate ou le méthylène bis(4-cyclohexylisocyanate) (HMDI),
   - d'au moins un polyester diol, de préférence de deux polyesters diols, ayant un indice hydroxyle (IOH) allant de 28 à 112 mg KOH/g, de préférence allant de 28 à 90 mg KOH/g, préférentiellement allant de 30 à 85 mg KOH/g, avantageusement allant de 34 à 85 mg KOH/g ;
B) au moins un triisocyanate à base de XDI choisi parmi les adduits de XDI et de triols, tel que par exemple l'adduit de méta-xylylène diisocyanate et de triméthylolpropane ayant la formule suivante :

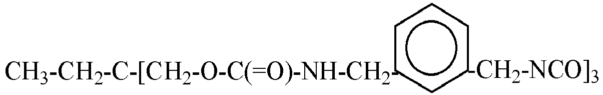

### Composant -OH :

Le(s) polyester polyol(s) utilisé(s) selon l'invention peu(ven)t représenter de 50% à 100% en poids du poids du composant -OH, de préférence de 60% à 90% en poids du poids du composant -OH.

A titre de polyester polyols utilisables dans le composant -OH, on peut utiliser n'importe quel polyester polyol habituellement utilisé dans le domaine des adhésifs de lamination bicomposants.

De préférence, le(s) polyester polyol(s) utilisable(s) dans le composant -OH présente(nt) un indice hydroxyle (IOH) allant de 28 à 112 mg KOH/g, de préférence allant de 28 à 90 mg KOH/g, préférentiellement allant de 30 à 85 mg KOH/g, avantageusement allant de 34 à 85 mg KOH/g ;.

De préférence, le(s) polyester polyol(s) utilisable(s) dans le composant -OH est (sont) linéaire(s) ou ramifié(s), saturé(s) ou insaturé(s).

De préférence, le(s) polyester polyol(s) utilisable(s) dans le composant -OH est (sont) de préférence choisi(s) parmi les polyester diols et leurs mélanges.

Plus préférentiellement, le(s) polyester polyol(s) est (sont) choisi(s) parmi les polyester diols utilisés pour préparer le prépolymère de polyuréthane à terminaisons NCO A) et les mélanges de polyester diol(s) comprenant au moins un polyester diol utilisé pour préparer le prépolymère de polyuréthane à terminaisons NCO A).

De préférence, le composant -OH est une composition comprenant un mélange de polyester diols, lesdits polyester diols ayant chacun un indice hydroxyle (IOH) allant de 28 à 112 mg KOH/g, de préférence allant de 28 à 90 mg KOH/g, préférentiellement allant de 30 à 85 mg KOH/g, avantageusement allant de 34 à 85 mg KOH/g.

De préférence, la quantité de polyester polyol(s) utilisé(s) dans le composant -OH est telle que la teneur en groupes OH va de 70 à 100 milliéquivalents de groupes OH pour 100 grammes (noté méq KOH/g) d'extrait sec de composant -OH, et préférentiellement de 80 à 90 méq OH/100 g d'extrait sec de composant -OH.

De préférence, les composants -NCO et -OH sont mélangés dans des quantités telles que le rapport r₃, va de 2 à 15, plus préférentiellement de 6 à 11.

De préférence, le mélange des composants -NCO et -OH est tel qu'il permet d'obtenir une composition présentant une viscosité adaptée à son utilisation dans un procédé de complexage conventionnel.

La composition adhésive bicomposante selon l'invention peut en outre comprendre au moins un promoteur d'adhésion, de préférence choisi parmi les silanes, les aminosilanes, les acryloyl silanes, et leurs mélanges. Le ou les promoteurs d'adhésion peut/peuvent être présente(s) dans le composant -NCO et/ou dans le composant -OH, de préférence dans le composant -NCO.

L'utilisation de promoteur d'adhésion confère à l'adhésif une meilleure résistance à la délamination à chaud particulièrement utile lorsqu'on souhaite fabriquer des laminés devant subir un traitement de pasteurisation ou de stérilisation.

La concentration totale en promoteur d'adhésion dans la composition adhésive bicomposant selon l'invention va de préférence de 0,1 à 2% en poids, plus préférentiellement de 0,5 à 1,5% en poids, par rapport au poids total de la composition adhésive.

### Structure multicouche

La composition adhésive selon l'invention peut être utilisée pour fabriquer une structure multicouche telle que décrite ci-après. Ainsi, l'invention a également pour objet une structure multicouche comprenant au moins deux couches de matériau liées entre elles par une couche adhésive, caractérisé en ce que ladite couche adhésive est constituée par une composition adhésive selon l'invention à l'état réticulé.

La couche adhésive est obtenue par réticulation de la composition adhésive (ou mélange adhésif) obtenue par mélange des composants -NCO et -OH, à raison d'une quantité de préférence inférieure ou égale à 5 g/m², plus préférentiellement allant de 1,4 à 4,5 g/m², et mieux encore allant de 2 à 4 g/m².

Les couches de matériau entourant la couche adhésive sont généralement constituées d'un ou plusieurs matériaux habituellement utilisés pour fabriquer des emballages flexibles.

A titre de matériaux utilisables, on peut citer le papier, un métal, comme par exemple l'aluminium, et les polymères thermoplastiques, ces derniers pouvant par ailleurs être métallisés ou enduits de substance(s) particulière(s) (par exemple à base d'oxyde de silicium ou d'oxyde d'aluminium) pour conférer des propriétés additionnelles (par exemple de barrière à l'humidité, aux gaz (O₂, N₂, CO₂, et leurs mélanges) et/ou à la lumière et aux rayons ultra-violet (UV)) au polymère thermoplastique.

A titre de polymères thermoplastiques utilisables, on peut citer par exemple :
- le polyéthylène (PE),
- le polypropylène (PP),
- un copolymère à base d'éthylène et de propylène,
- le polyamide (PA), orienté ou non,
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polychlorure de vinylidène (PVDC),
- le polyfluorure de vinylidène (PVDF),
- un polymère ou copolymère d'acide lactique (PLA), ou
- un polyhydroxyalkanoate (PHA).

Les films en PET ou PP peuvent notamment être métallisés (par de l'aluminium). La préparation de ces films de polymère thermoplastique métallisés est bien connue par l'homme du métier et permet de revêtir de manière homogène au moins une des surfaces dudit film d'une couche de particules métalliques (aluminium), en général de quelques nanomètres d'épaisseur.

Les couches de matériau entourant la couche adhésive peuvent en outre comprendre un ou plusieurs additifs afin de leurs conférer des propriétés additionnelles. A titre d'additifs utilisables, on peut citer par exemple des agents glissants et des agents antibuée.

Selon un mode de réalisation préféré, l'invention concerne une structure multicouche comprenant au moins deux couches de matériau liées entre elles par au moins une couche adhésive, caractérisé en ce que :
- ladite couche adhésive est constituée par une composition adhésive selon l'invention obtenue après mélange de ses composants à l'état réticulé, à raison d'une quantité inférieure à 5 g/m², et
- lesdites couches de matériau étant constituées de préférence d'un ou plusieurs matériaux choisis indépendamment l'un de l'autre parmi le polyamide orienté (OPA), le PE, le PP, le PET, le PET métallisé, et l'aluminium.

Après réticulation, le joint adhésif (constitué par la couche de colle réticulée) assure un niveau de cohésion satisfaisant entre les deux couches de matériau, qui est avantageusement maintenu après une exposition brève ou prolongée dudit joint adhésif à température élevée, ce qui permet de fabriquer d'une part, des structures multicouches thermoscellables, c'est-à-dire pouvant notamment être soumises à une température supérieure ou égale à 200°C pendant une seconde environ, et d'autre part, des structures multicouches stérilisables ou pasteurisables, c'est-à-dire pouvant être exposée à des températures allant de 100°C à 135°C, ou encore allant de 70°C à moins de 100°C (par exemple de 70°C à 99°C), respectivement, pendant une durée suffisante pour assurer la stérilisation ou la pasteurisation de la structure multicouche et le cas échéant du contenu conditionné dans ladite structure. Cette durée peut varier dans une large mesure selon la nature du contenu conditionné (par exemple aliment). De préférence, cette durée est d'au moins 15 minutes. Plus préférentiellement, cette durée va de 15 minutes à 2 heures.

Selon un mode de réalisation plus préféré, l'invention concerne une structure multicouche comprenant une première couche de matériau métallique et une deuxième couche de matériau, identique ou différente de la première, et liées entre elles au niveau de la surface métallique de ladite couche de matériau métallique par au moins une couche adhésive, caractérisé en ce que :
- ladite couche adhésive est constituée par une composition adhésive selon l'invention obtenue après mélange de ses composants à l'état réticulé, à raison d'une quantité inférieure à 5 g/m².

La couche de matériau métallique peut être une feuille d'aluminium ou un film en polymère thermoplastique métallisé sur au moins l'une de ses surfaces et de préférence sur une seule surface (par de l'aluminium).

L'épaisseur de chacune des deux couches de matériau adjacentes à la couche adhésive et des autres couches éventuellement mises en œuvre dans la structure multicouche selon l'invention est susceptible de varier dans un large domaine allant de 5 à 150 µm. L'épaisseur totale de la structure multicouche est susceptible de varier également dans un large domaine allant de 20 à 400 µm.

De préférence, la structure multicouche se présente sous la forme d'un film multicouche.

### Procédé de fabrication d'une structure multicouche

L'invention a également pour objet un procédé de fabrication d'une structure multicouche selon l'invention, comprenant les étapes suivantes :
(i) le mélange des composants -NCO et -OH de la composition adhésive bicomposante selon l'invention, de préférence à température ambiante, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange, de préférence à température ambiante.

De préférence, les composants -NCO et -OH sont mélangés dans des quantités telle que le rapport r₃ va de va de 2 à 15, plus préférentiellement de 6 à 11.

L'enduction dudit mélange peut être réalisée sur tout ou partie de la surface d'un matériau.

De préférence, le mélange adhésif est enduit à raison d'une quantité de préférence inférieure ou égale à 5 g/m², plus préférentiellement allant de 1,4 à 4,5 g/m², et mieux encore allant de 2 à 4 g/m².

En particulier, l'enduction dudit mélange peut être réalisée sous la forme d'une couche d'épaisseur allant de 1,5 à 5 µm. L'enduction est réalisée de préférence de manière continue ou substantiellement continue.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

Eventuellement, la réticulation du mélange adhésif sur la surface du matériau peut-être accélérée en chauffant le complexe à une température inférieure ou égale à 40°C. Ceci peut être réalisé en plaçant le complexe dans une enceinte climatique maintenue à une température de 40°C et une humidité relative de 50 %. Le temps nécessaire à la réticulation complète de la couche adhésive du complexe est généralement inférieur à 5 jours à compter de la fabrication dudit complexe.

### Utilisation d'une structure multicouche

L'invention a également pour objet l'utilisation d'une structure multicouche selon l'invention pour la fabrication d'emballages flexibles, et en particulier d'emballages flexibles, thermoscellables, stérilisables et/ou pasteurisables.

Les complexes selon l'invention peuvent en effet être traités thermiquement sans perte substantielle du niveau de cohésion entre les couches de matériau liées par une couche adhésive selon l'invention.

L'invention est à présent décrite dans les exemples de réalisation suivants qui sont donnés à titre purement illustratif, et ne sauraient être interprétés pour en limiter la portée.

### Exemples 1-2-3 :

Les ingrédients suivants ont été utilisés :
- Takenate™ 500 commercialisé par Mitsui Chemical : méta-xylylène diisocyanate (m-XDI) titrant en moyenne à 44,7% en poids en groupe NCO par rapport au poids de m-XDI,
- Desmodur® W commercialisé par Covestro : Méthylène bis(4-cyclohexylisocyanate) (HMDI) titrant en moyenne à 31,8% en poids en groupe NCO par rapport au poids de HMDI,
- Vestanat® IPDI commercialisé par Evonik : isophorone diisocyanate (IPDI) titrant en moyenne à 37,6% en poids en groupe NCO par rapport au poids de l'IPDI,
- Dekatol® 105 fabriqué par la société Bostik correspondant à un polyester diol d'indice hydroxyle égal à 85 mg KOH/g environ,
- Dekatol® 1105 fabriqué par la société Bostik correspondant à un polyester diol d'indice hydroxyle égal à 97,5 mg KOH/g environ,
- EPS® 74/1 commercialisé par la société Bostik correspondant à un polyester diol d'indice hydroxyle égal à 34,9 mg KOH/g environ, dilué à 63% en poids dans l'acétate d'éthyle,
- Tyzor Pita® commercialisé par la société Dorf Ketal et correspondant à un catalyseur à base d'éthyl-acétoacétate de titane,
- Takenate® D-110N commercialisé par Mitsui Chemical: adduit de m-XDI et de triméthylolpropane correspondant à un triisocyanate à base de XDI titrant en moyenne à 15,3% en poids en groupe NCO par rapport au poids dudit triisocyanate, dilué à 75% en poids dans l'acétate d'éthyle,
- Vestanat® T1890/100 commercialisé par la société Evonik correspondant à un triisocyanate isocyanurate d'IPDI titrant en moyenne à 17,3% en poids en groupe NCO par rapport au poids dudit produit commercial,
- l'acétate d'éthyle utilisé comme solvant organique,
- Silquest® A1110 commercialisé par la société Momentive correspondant à un promoteur d'adhésion de type (3-aminopropyl)triméthoxysilane.

### 1.1. Composant -NCO :

Les composants NCO des exemples 1, 2 et 3 ont été préparés à l'aide des différents ingrédients ci-dessus dans les proportions indiquées dans le tableau 1. Les teneurs figurant dans ce tableau sont exprimées en % en poids par rapport au poids de composant -NCO.

### Préparation du composant -NCO de l'exemple 1 selon l'invention :

Dans un réacteur muni d'un réfrigérant, on introduit 256,35 g de Dekatol® 105 et on chauffe à 50°C. Le mélange est ensuite placé sous vide et maintenu pendant 1 heure sous agitation à 50°C. Le vide est ensuite rompu et on introduit 284,46 g d'acétate d'éthyle, 429,88 g d'EPS® 74/1 puis 87,43 g de m-XDI et on chauffe à 80°C pendant 1 heure. Après cela, on introduit 32,87 g d'une solution à 75% en poids d'adduit de XDI et de TMP dans de l'acétate d'éthyle, puis 1,10 g de Tyzor Pita® et on maintient le mélange sous agitation pendant 2 heures à 80°C jusqu'à disparition complète des fonctions hydroxyle des polyesters diols.

Le taux d'avancement de la réaction est contrôlé en mesurant la teneur en groupe NCO par un dosage de dibutylamine en retour, à l'aide d'acide chlorhydrique selon la norme NF T52-132.

La réaction est stoppée en refroidissant le mélange à 50°C, lorsque la teneur en groupe NCO mesurée est environ égal à la teneur en groupe NCO souhaitée.

Puis, on introduit 7,91 g de Silquest® A1110 lentement sous forte agitation.

### Préparation du composant -NCO de l'exemple 2 comparatif:

Le composant -NCO de l'exemple 2 est préparé en suivant le même procédé de préparation que le composant -NCO de l'exemple 1, dans lequel le m-XDI est remplacé par l'IPDI et la solution d'adduit de XDI et de TMP est remplacée par le Vestanat® T1890/100.

### Préparation du composant -NCO de l'exemple 3 :

Le composant -NCO de l'exemple 3 est préparé en suivant le même procédé de préparation que le composant -NCO de l'exemple 1, dans lequel le m-XDI est remplacé par le HMDI.

Sur les composants ainsi obtenus aux exemples 1, 2 et 3 :
- on a mesuré la teneur en groupe NCO. Cette teneur mesurée en % en poids du composant - NCO a été convertie en milliéquivalent de groupes NCO présents dans 100 g de composant - NCO (méq/100g), puis rapportée sur 100 g d'extrait sec du composant -NCO,
- on a mesuré la viscosité du composant -NCO obtenue est mesurée 24 heures après sa fabrication (J+1) à 23°C,
- on a calculé les rapports r₁ et r₂.

L'ensemble des valeurs obtenues est consigné dans le tableau 2 ci-dessous.

### 1.2. Composant -OH :

Le composant -OH est préparé par mélange de Dekatol® 1105 et d'EPS 74/1 en quantités telle que le mélange comprend 15% en poids de Dekatol® 1105 et 85% en poids d'EPS 74/1 par rapport au poids du mélange. Le composant -OH préparé a un extrait sec de 69% environ.

La teneur en groupe OH dans le composant -OH, exprimée en milligramme de KOH par gramme de composant -OH (mg KOH/g) est convertie en milliéquivalent de groupes OH présents dans 100 g de composant -OH (méq OH/100g), puis rapportée sur 100 g d'extrait sec du composant -OH (voir tableau 2 ci-dessous).

### 1.3. Préparation de la composition adhésive (ou mélange adhésif):

Le composant -NCO préparé au paragraphe 1.1 et le composant -OH préparé au paragraphe 1.2 sont mélangés, compte tenu de leur teneur respective en groupe NCO et groupe OH, selon un rapport pondéral donné permettant d'atteindre un rapport molaire NCO/OH (r₃) donné. Ces rapports sont indiqués dans le tableau 2.

Le mélange est effectué à température ambiante via une unité de mélange et un mélangeur statique puis introduit entre les rouleaux doseurs de complexage décrite au point 1.4. ci-après pour être appliqué à cette température.

### 1.4. Préparation des structures multicouches A et B :

Le mélange obtenu au paragraphe 1.3. est utilisé pour la fabrication :
- d'une structure bicouche A (notée OPA15/CPP70) dont la première couche est constituée d'un film de polyamide orienté (OPA) d'épaisseur 15 µm et la deuxième couche d'un film de polypropylène coulé (« cast polypropylene » en anglais, noté CPP) d'épaisseur 70 µm ; et
- d'une structure tricouche B (notée (PET12-A17)/CPP70) dont la première couche est constituée d'un film de PET d'épaisseur 12 µm, la deuxième couche d'une feuille d'aluminium d'épaisseur 7 µm, et la troisième couche d'un film de CPP d'épaisseur 70 µm.

On utilise pour cela une machine de complexage de type Nordmeccanica pourvu d'un dispositif d'enduction de type rouleau fonctionnant à une température de 50°C et à une vitesse de défilement de 50 mètre par minute.

Pour préparer la structure bicouche, la composition adhésive constituée du mélange à tester est appliquée entre chacune des couches individuelles de matériau en une couche ayant une épaisseur d'environ 4 µm correspondant à une application d'environ 4 grammes de colle par mètre carré de film.

Pour préparer la structure tricouche, la composition adhésive constituée du mélange à tester est appliquée entre la feuille d'aluminium et le film de CPP en une couche ayant une épaisseur d'environ 4 µm correspondant à une application d'environ 4 grammes de colle par mètre carré de film. Le film de PET et la feuille d'aluminium sont collées à l'aide de la même machine de complexage en appliquant une couche de colle standard polyuréthane LG59 commercialisée par Bostik à raison de 4 grammes de colle par mètre carré correspondant à une épaisseur d'environ 4 µm.

### 1.5. Mesure de la cohésion et évaluation du degré de réticulation des structures multicouches A et B à température ambiante (23°C) avant stérilisation :

Une première éprouvette de la structure multicouche est laissée à réticuler dans une enceinte climatique maintenue à une température de 23 °C et une humidité relative de 50% pendant 4 jours, et est soumise au test de pelage à 180° décrit ci-après.

Une seconde éprouvette de la structure multicouche est laissée à dans les mêmes conditions pendant 7 jours, et est soumise au même test de pelage à 180°.

Les mesures de pelage, réalisées à J+4 et J+7, c'est-à-dire 4 jours et 7 jours après la fabrication de la structure multicouche, permettent de suivre la montée en cohésion du mélange adhésif dans le temps.

En outre, après avoir réalisé le test de pelage, on a évalué la présence ou non de tack (pouvoir collant) en exerçant une légère pression de l'index sur la surface de la couche de colle laissée apparente après séparation des couches de matériau. La présence de tack indique en général que la colle n'est pas complètement réticulée.

### Description du test de pelage à 180° d'une structure bicouche :

La cohésion du complexe est évaluée par le test de pelage à 180° tel que décrit dans la norme française NF T 54-122. Le principe de ce test consiste en la détermination de la force nécessaire à la séparation (ou pelage) de deux couches individuelles de matériau liées par l'adhésif à tester.

Une éprouvette de forme rectangulaire de 15 mm de large et d'environ 10 cm de long est découpée dans le complexe. On décolle manuellement à partir de l'extrémité de cette éprouvette, et sur environ 2 cm, les deux couches individuelles de matériau comprises dans cette bande et les deux extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des deux couches dont les extrémités décollées se déplacent progressivement selon un axe vertical en formant un angle de 180°, la partie fixe -reliée à un dynamomètre- mesure la force supportée par l'éprouvette ainsi maintenue, et mesurée en Newton.

De manière générale, on estime que le niveau de cohésion de la couche d'un adhésif est suffisant pour que la structure multicouche puisse subir les différentes opérations nécessaires à sa transformation en emballage flexible, lorsque la valeur obtenue au test de pelage à 180° sur le complexe est supérieure ou égale à 5 Newton (N).

### Description du test de pelage à 180° d'une structure tricouche :

La cohésion du complexe est évaluée de la même façon que pour une structure bicouche au niveau de l'interface entre la couche de CPP et la couche composite constituée des couches individuelles d'aluminium (Al) et de PET. On mesure la force nécessaire à la séparation (ou pelage) de la couche de CPP et de la couche (Aluminium-PET).

### Résultats :

Il a été observé que la composition adhésive de l'exemple 1 réticule plus rapidement que la composition adhésive de l'exemple 2. En effet, après un séjour de 4 jours dans une enceinte climatique maintenue à une température de 23 °C et une humidité relative de 50 %, la composition adhésive de l'exemple 1 avait atteint un degré de réticulation suffisant pour conférer à la structure multicouche le niveau de cohésion nécessaire pour pouvoir être transformée en emballage flexible, contrairement à la composition adhésive de l'exemple 2.

En effet, le pelage des complexes A et B obtenus à partir de la composition adhésive de l'exemple 1 a nécessité d'exercer une force de pelage supérieure à 5 Newtons dès J+4, et a conduit à la déchirure d'une des couches de matériau du complexe (OPA ou Aluminium).

De bons résultats ont également été obtenus avec la composition adhésive de l'exemple 3.

En revanche, il a été observé que les complexes A et B obtenus à partir de la composition adhésive de l'exemple 2 soumise au test de pelage à J+4 se délaminent au niveau de la couche adhésive et présente du tack sur la surface de la couche de colle laissée apparente après séparation des couches de matériau du complexe.

### 1.6. Résistance à la stérilisation de la structure multicouche A et B :

On place la structure multicouche obtenue au paragraphe 1.4 dans une autoclave à 130°C en phase vapeur durant une heure sous 3 bars, afin de la stériliser, et l'on procède 1 heure après sortie de l'étuve à un test de pelage à 180°.

On estime que la structure multicouche présente une résistance à la stérilisation satisfaisante, lorsque le niveau de cohésion mesuré avant stérilisation sur la colle complètement réticulée, et après stérilisation est sensiblement égal. En particulier, cela se traduit par un écart de la valeur obtenue au test de pelage à 180° après stérilisation inférieur ou égal à 30% de la valeur mesurée avant stérilisation.

On a observé pour l'ensemble des compositions adhésives testées que les complexes A présentent une résistance à la stérilisation satisfaisante, mais que seule les compositions adhésives des exemples 1 et 3 selon l'invention permet d'obtenir un complexe B satisfaisant au test de stérilisation.

Ainsi, les différents tests réalisés ont permis de démontrer que seules les structures multicouches issues des compositions adhésives des exemples 1 et 3 présentent l'ensemble des propriétés requises pour fabriquer rapidement des emballages flexibles stérilisables.

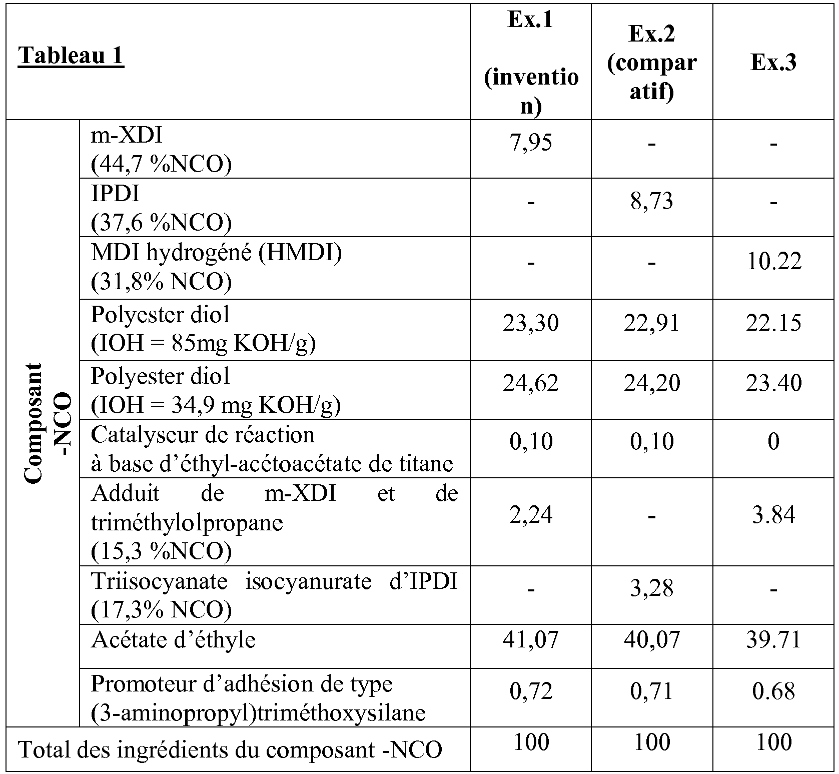

| **Tableau 2** | | **Ex.1 (invention)** | **Ex.2 (comparatif)** | **Ex.3** |
|---|---|---|---|---|
| **Composant -NCO** | Rapport molaire NCO/OH (r₁) | 1,7 | 1,6 | 1,6 |
| | Rapport molaire NCO diisocyanate / NCO triisocyanate (r₂) | 10,3 | 5,8 | - |
| | Teneur en groupe -NCO dans l'extrait sec du composant -NCO (méq NCO /100g) | 71,6 | 69,9 | 93.9 |
| | Viscosité à 23°C à J+1 (mPa.s.) | 914 | 700 | 493 |
| **Composant -OH** | Teneur en groupe -OH dans l'extrait sec du composant -OH (méq OH/100g) | 86,6 | 86,6 | 86.6 |
| **Mélange des composants -NCO et -OH** | Rapport pondéral du composant -NCO / du composant -OH | 100/7 | 100/10 | 100/10 |
| | Rapport pondéral d'extrait sec du composant -NCO / d'extrait sec du composant -OH | 100/8,2 | 100/11,5 | 100/11,4 |
| | Rapport molaire NCO/OH (r₃) | 10,1 | 7,1 | 9,5 |

| **Tableau 3** | | **Ex.1 (invention)** | | **Ex.2 (comparatif)** | | **Ex. 3 (invention)** | |
|---|---|---|---|---|---|---|---|
| Grammage (g/m²) | | 3,7 | | 4 | | 3,8 | |
| Structure multicouche | | A | B | A | B | A | B |
| Force de pelage avant pasteurisation (N/15mm) | J+4 | 6,56 | 5,34 | 4,67 | 3,96 | 6,18 | 5,17 |
| | J+7 | 7,4 | 5,56 | 5,48 | 4,26 | 7,06 | 5,52 |
| Résistance à la stérilisation | | Oui | Oui | Oui | Non | oui | oui |

## Revendications

1. Composition adhésive bicomposante à base de polyuréthane comprenant un composant -NCO et un composant -OH tels que :
- le composant -NCO est une composition comprenant :
A) au moins un prépolymère de polyuréthane comportant au moins deux groupements terminaux NCO obtenu par réaction de polyaddition :
- d'au moins un polyisocyanate aliphatique choisi parmi les monomères diisocyanates aliphatiques et les mélanges d'au moins un monomère diisocyanate aliphatique avec au moins un triisocyanate à base de XDI, et
- d'au moins un polyester diol,
B) au moins un triisocyanate à base de XDI, et
- le composant -OH est une composition comprenant au moins un polyester polyol.

2. Composition selon la revendication 1, **caractérisée en ce que** le(s) monomère(s) diisocyanate(s) aliphatique(s) est (sont) choisi(s) parmi :
- le xylylène diisocyanate (XDI),
- les monomère diisocyanates aliphatiques différents du XDI, et
- les mélanges de monomères diisocyanates aliphatiques et de XDI comprenant au moins 50% en poids de XDI par rapport au poids dudit mélange.

3. Composition selon l'une quelconque des revendications 1 ou 2, **caractérisée en ce que** le monomère diisocyanate aliphatique est choisi parmi :
- Hexaméthylène diisocyanate (HDI),
- Heptane diisocyanate,
- Octane diisocyanate,
- Nonane diisocyanate,
- Décane diisocyanate,
- Undécane diisocyanate,
- Dodécane diisocyanate,
- Allophanate de HDI,
- Méthylène bis(4-cyclohexylisocyanate) (HMDI),
- Isophorone diisocyanate (IPDI),
- Norbornane diisocyanate,
- Norbornène diisocyanate,
- 1,4-cyclohexane diisocyanate (CHDI),
- Méthylcyclohexane diisocyanate,
- Ethylcyclohexane diisocyanate,
- Propylcyclohexane diisocyanate,
- Méthyldiéthylcyclohexane diisocyanate,
- Cyclohexane diméthylène diisocyanate,
- 1,5-diisocyanato-2-méthylpentane (MPDI),
- 1,6-diisocyanato-2,4,4-triméthylhexane,
- 1,6-diisocyanato-2,2,4-trimethylhexane (TMDI),
- 4-isocyanatomethyl-1,8-octane diisocyanate (TIN),
- (2,5)-bis(isocyanatométhyl)bicyclo[2.2.1]heptane (2,5-NBDI),
- (2,6)-bis(isocyanatométhyl)bicyclo[2.2.1]heptane (2,6-NBDI),
- 1,3-bis(isocyanatométhyl)cyclohexane (1,3-H6-XDI),
- 1,4-bis(isocyanatométhyl)-cyclohexane (1,4-H6-XDI),
- le xylylène-diisocyanate, en particulier le m-xylylène diisocyanate ;
- et leurs mélanges.

4. Composition selon l'une quelconque des revendications 1 à 3, **caractérisée en ce que** le monomère diisocyanate aliphatique est le XDI ou le méthylène bis(4-cyclohexylisocyanate) (HMDI), de préférence le monomère diisocyanate aliphatique étant le XDI .

5. Composition selon l'une quelconque des revendications 1 à 4, **caractérisée en ce que** le rapport du nombre de groupes NCO présents dans la quantité totale de monomère(s) diisocyanate(s) aliphatique(s) utilisé(s) pour synthétiser le prépolymère de polyuréthane à terminaisons NCO, sur le nombre de groupes OH présents dans la quantité totale de diol(s) utilisé(s) pour synthétiser le prépolymère de polyuréthane à terminaisons NCO, noté r₁, va de 1,0 à 2,2.

6. Composition selon l'une quelconque des revendications 1 à 5, **caractérisée en ce que** le rapport molaire du nombre de groupes NCO présents dans la quantité totale de monomère(s) diisocyanate(s) aliphatique(s) utilisé(s) pour synthétiser le prépolymère de polyuréthane à terminaisons NCO A) sur le nombre de groupes NCO présents dans la quantité totale de triisocyanate(s) à base de XDI, noté r₂, va de 3 à 11.

7. Composition selon l'une quelconque des revendications 1 à 6, **caractérisée en ce que** le(s) triisocyanate(s) à base de XDI est (sont) choisi(s) parmi les isocyanurates du XDI, les biurets du XDI, les adduits de XDI et de triols, et leurs mélanges, de préférence choisi(s) parmi les adduits de XDI et de triols tels que par exemple l'adduit de méta-xylylène diisocyanate et de triméthylolpropane.

8. Composition selon l'une quelconque des revendications 1 à 7, **caractérisée en ce que** le(s) polyester diol(s) et polyester polyol(s) présente(nt) un indice hydroxyle (IOH) allant de 28 à 112 mg KOH/g, de préférence allant de 28 à 90 mg KOH/g, préférentiellement allant de 30 à 85 mg KOH/g, avantageusement allant de 34 à 85 mg KOH/g.

9. Composition selon l'une quelconque des revendications 1 à 8, **caractérisée en ce que** le composant -OH est une composition comprenant un polyester diol, ou un mélange de polyester diols.

10. Composition selon l'une quelconque des revendications 1 à 9, **caractérisée en ce que** la teneur en groupes NCO dans le composant -NCO va de 40 à 125 milliéquivalents de groupes NCO pour 100 grammes d'extrait sec de composant -NCO.

11. Composition selon l'une quelconque des revendications 1 à 10, **caractérisée en ce que** la teneur en groupes OH va de 70 à 100 milliéquivalents de groupes OH pour 100 grammes d'extrait sec de composant -OH.

12. Composition selon l'une quelconque des revendications 1 à 11, **caractérisée en ce que** les composants -NCO et -OH, destinés à être mélangés, sont dans des quantités telles que le rapport du nombre de groupes NCO présents dans la quantité totale de composant NCO sur le nombre de groupes OH présents dans la quantité totale de composant OH, noté r₃, va de 2 à 15.

13. Structure multicouche comprenant au moins deux couches de matériau liées entre elles par une couche adhésive, **caractérisé en ce que** ladite couche adhésive est constituée par la composition adhésive telle que définie dans l'une quelconque des revendications 1 à 12 obtenue par mélange des composants -NCO et -OH, à l'état réticulé.

14. Structure multicouche selon la revendication précédente, comprenant au moins une couche de matériau à base d'aluminium.

15. Procédé de fabrication d'une structure multicouche telle que définie dans la revendication 13 ou 14, comprenant les étapes suivantes :
(i) le mélange des composants -NCO et -OH, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange.

16. Procédé selon la revendication précédente, dans lequel le mélange du composant -NCO et du composant -OH comprend au moins un solvant et dans lequel le procédé comprend en outre une étape d'évaporation du ou des solvants.

17. Utilisation d'une structure multicouche telle que définie dans la revendication 13 ou 14 pour la fabrication d'emballages flexibles thermoscellables, stérilisables et/ou pasteurisables.

## Patentansprüche

1. Zweikomponentige Klebstoffzusammensetzung auf Basis von Polyurethan, umfassend eine -NCO-Komponente und eine -OH-Komponente derart, dass:
- die -NCO-Komponente eine Zusammensetzung ist, die
A) mindestens ein durch Polyadditionsreaktion von
- mindestens einem aliphatischen Polyisocyanat, das aus aliphatischen Diisocyanat-Monomeren und Mischungen von mindestens einem aliphatischen Diisocyanat-Monomer mit mindestens einem Triisocyanat auf Basis von XDI und
- mindestens einem Polyesterdiol erhaltenes Polyurethan-Prepolymer mit mindestens zwei NCO-Endgruppen und
B) mindestens ein Triisocyanat auf Basis von XDI umfasst, und
- die -OH-Komponente eine Zusammensetzung ist, die mindestens ein Polyesterpolyol umfasst.

2. Zusammensetzung nach Anspruch 1, **dadurch gekennzeichnet, dass** das aliphatische Diisocyanat-Monomer bzw. die aliphatischen Diisocyanat-Monomere aus
- Xylylendiisocyanat (XDI),
- aliphatischen Diisocyanat-Monomeren, die von XDI verschieden sind, und
- Mischungen von aliphatischen Diisocyanat-Monomeren und XDI mit mindestens 50 Gew.-% XDI, bezogen auf das Gewicht der Mischung, ausgewählt ist bzw. sind.

3. Zusammensetzung nach Anspruch 1 oder 2, **dadurch gekennzeichnet, dass** das aliphatische Diisocyanat-Monomer aus
- Hexamethylendiisocyanat (HDI),
- Heptandiisocyanat,
- Octandiisocyanat,
- Nonandiisocyanat,
- Decandiisocyanat,
- Undecandiisocyanat,
- Dodecandiisocyanat,
- HDI-Allophanat,
- Methylenbis(4-cyclohexylisocyanat) (HMDI),
- Isophorondiisocyanat (IPDI),
- Norbornandiisocyanat,
- Norbornendiisocyanat,
- 1,4-Cyclohexandiisocyanat (CHDI),
- Methylcyclohexandiisocyanat,
- Ethylcyclohexandiisocyanat,
- Propylcyclohexandiisocyanat,
- Methyldiethylcyclohexandiisocyanat,
- Cyclohexanedimethylendiisocyanat,
- 1,5-Diisocyanato-2-methylpentan (MPDI),
- 1,6-Diisocyanato-2,4,4-trimethylhexan,
- 1,6-Diisocyanato-2,2,4-trimethylhexan (TMDI),
- 4-Isocyanatomethyl-l,8-octandiisocyanat (TIN),
- (2,5)-Bis(isocyanatomethyl)bicyclo[2.2.1]heptan (2,5-NBDI),
- (2,6)-Bis(isocyanatomethyl)bicyclo[2.2.1]heptan (2,6-NBDI),
- 1,3-Bis(isocyanatomethyl)cyclohexan (1,3-H6-XDI),
- 1,4-Bis(isocyanatomethyl)cyclohexan (1,4-H6-XDI),
- Xylylendiisocyanat, insbesondere m-Xylylendiisocyanat
- und Mischungen davon
ausgewählt ist.

4. Zusammensetzung nach einem der Ansprüche 1 bis 3, **dadurch gekennzeichnet, dass** es sich bei dem aliphatischen Diisocyanat-Monomer um XDI oder Methylenbis(4-cyclohexylisocyanat) (HMDI) handelt, wobei es sich bei dem aliphatischen Diisocyanat-Monomer vorzugsweise um XDI handelt.

5. Zusammensetzung nach einem der Ansprüche 1 bis 4, **dadurch gekennzeichnet, dass** das als r₁ bezeichnete Verhältnis der Zahl von NCO-Gruppen in der Gesamtmenge des aliphatischen Diisocyanat-Monomers bzw. der aliphatischen Diisocyanat-Monomere, das bzw. die zur Synthese des Polyurethan-Prepolymers mit NCO-Endgruppen verwendet wird bzw. werden, zur Zahl der OH-Gruppen in der Gesamtmenge des Diols bzw. der Diole, das bzw. die zur Synthese des Polyurethan-Prepolymers mit NCO-Endgruppen verwendet wird bzw. werden, im Bereich von 1,0 bis 2,2 liegt.

6. Zusammensetzung nach einem der Ansprüche 1 bis 5, **dadurch gekennzeichnet, dass** das als r₂ bezeichnete Molverhältnis der Zahl von NCO-Gruppen in der Gesamtmenge des aliphatischen Diisocyanat-Monomers bzw. der aliphatischen Diisocyanat-Monomere, das bzw. die zur Synthese des Polyurethan-Prepolymers mit NCO-Endgruppen A) verwendet wird bzw. werden, zur Zahl der NCO-Gruppen in der Gesamtmenge des Triisocyanats bzw. der Triisocyanate auf Basis von XDI im Bereich von 3 bis 11 liegt.

7. Zusammensetzung nach einem der Ansprüche 1 bis 6, **dadurch gekennzeichnet, dass** das Triisocyanat bzw. die Triisocyanate auf Basis von XDI aus XDI-Isocyanuraten, XDI-Biureten, Addukten von XDI und Triolen und Mischungen davon und vorzugsweise aus Addukten von XDI und Triolen wie beispielsweise dem Addukt von meta-Xylylendiisocyanat und Trimethylolpropan ausgewählt ist bzw. sind.

8. Zusammensetzung nach einem der Ansprüche 1 bis 7, **dadurch gekennzeichnet, dass** das Polyesterdiol bzw. die Polyesterdiole und das Polyesterpolyol bzw. die Polyesterpolyole eine Hydroxylzahl (OHZ) im Bereich von 28 bis 112 mg KOH/g, vorzugsweise im Bereich von 28 bis 90 mg KOH/g, bevorzugt im Bereich von 30 bis 85 mg KOH/g, vorteilhafterweise im Bereich von 34 bis 85 mg KOH/g, aufweist bzw. aufweisen.

9. Zusammensetzung nach einem der Ansprüche 1 bis 8, **dadurch gekennzeichnet, dass** die -OH-Komponente eine Zusammensetzung ist, die ein Polyesterdiol oder eine Mischung von Polyesterdiolen umfasst.

10. Zusammensetzung nach einem der Ansprüche 1 bis 9, **dadurch gekennzeichnet, dass** der Gehalt an NCO-Gruppen in der -NCO-Komponente im Bereich von 40 bis 125 Milliäquivalente NCO-Gruppen pro 100 g Feststoffgehalt der -NCO-Komponente liegt.

11. Zusammensetzung nach einem der Ansprüche 1 bis 10, **dadurch gekennzeichnet, dass** der Gehalt an OH-Gruppen im Bereich von 70 bis 100 Milliäquivalente OH-Gruppen pro 100 g Feststoffgehalt der -OH-Komponente liegt.

12. Zusammensetzung nach einem der Ansprüche 1 bis 11, **dadurch gekennzeichnet, dass** die zu mischenden -NCO- und -OH-Komponenten in solchen Mengen vorliegen, dass das als r₃ bezeichnete Verhältnis der Zahl von NCO-Gruppen in der Gesamtmenge der NCO-Komponente zur Zahl von OH-Gruppen in der Gesamtmenge der OH-Komponente im Bereich von 2 bis 15 liegt.

13. Mehrschichtstruktur mit mindestens zwei Materialschichten, die durch eine Klebstoffschicht miteinander verbunden sind, **dadurch gekennzeichnet, dass** die Klebstoffschicht aus der durch Mischen der -NCO- und -OH-Komponenten erhaltenen Klebstoffzusammensetzung gemäß einem der Ansprüche 1 bis 12 in vernetztem Zustand besteht.

14. Mehrschichtstruktur nach dem vorhergehenden Anspruch mit mindestens einer Materialschicht auf Basis von Aluminium.

15. Verfahren zur Herstellung einer Mehrschichtstruktur gemäß Anspruch 13 oder 14, das die folgenden Schritte umfasst:
(i) Mischen der -NCO- und -OH-Komponenten, dann
(ii) Beschichten der Oberfläche einer ersten Materialschicht mit der Mischung, dann
(iii) Auflaminieren der Oberfläche einer zweiten Materialschicht auf die beschichtete Oberfläche, dann
(iv) Vernetzen der Mischung.

16. Verfahren nach dem vorhergehenden Anspruch, wobei die Mischung der -NCO-Komponente und der -OH-Komponente mindestens ein Lösungsmittel umfasst und wobei das Verfahren außerdem einen Schritt des Verdampfens des Lösungsmittels bzw. der Lösungsmittel umfasst.

17. Verwendung einer Mehrschichtstruktur gemäß Anspruch 13 oder 14 zur Herstellung von heißsiegelfähigen, sterilisierbaren und/oder pasteurisierbaren flexiblen Verpackungen.

## Claims

1. Two-component polyurethane-based adhesive composition comprising an -NCO component and an -OH component, such that:
- the -NCO component is a composition comprising:
A) at least one polyurethane prepolymer comprising at least two NCO end groups obtained by a polyaddition reaction:
- of at least one aliphatic polyisocyanate chosen from aliphatic diisocyanate monomers and mixtures of at least one aliphatic diisocyanate monomer with at least one triisocyanate based on XDI, and
- of at least one polyester diol,
B) at least one triisocyanate based on XDI, and
- the -OH component is a composition comprising at least one polyester polyol.

2. Composition according to Claim 1, **characterized in that** the aliphatic diisocyanate monomer(s) is (are) chosen from:
- xylylene diisocyanate (XDI),
- aliphatic diisocyanate monomers other than XDI, and
- the mixtures of aliphatic diisocyanate monomers and of XDI comprising at least 50% by weight of XDI, with respect to the weight of said mixture.

3. Composition according to either one of Claims 1 and 2, **characterized in that** the aliphatic diisocyanate monomer is chosen from:
- Hexamethylene diisocyanate (HDI),
- Heptane diisocyanate,
- Octane diisocyanate,
- Nonane diisocyanate,
- Decane diisocyanate,
- Undecane diisocyanate,
- Dodecane diisocyanate,
- HDI allophanate,
- Methylenebis(4-cyclohexyl isocyanate) (HMDI),
- Isophorone diisocyanate (IPDI),
- Norbornane diisocyanate,
- Norbornene diisocyanate,
- 1,4-Cyclohexane diisocyanate (CHDI),
- Methylcyclohexane diisocyanate,
- Ethylcyclohexane diisocyanate,
- Propylcyclohexane diisocyanate,
- Methyldiethylcyclohexane diisocyanate,
- Cyclohexanedimethylene diisocyanate,
- 1,5-Diisocyanato-2-methylpentane (MPDI),
- 1,6-Diisocyanato-2,4,4-trimethylhexane,
- 1,6-Diisocyanato-2,2,4-trimethylhexane (TMDI),
- 4-Isocyanatomethyl-1,8-octane diisocyanate (TIN),
- 2,5-Bis(isocyanatomethyl)bicyclo[2.2.1]heptane (2,5-NBDI),
- 2,6-Bis(isocyanatomethyl)bicyclo[2.2.1]heptane (2,6-NBDI),
- 1,3-Bis(isocyanatomethyl)cyclohexane (1,3-H6-XDI),
- 1,4-Bis(isocyanatomethyl)cyclohexane (1,4-H6-XDI),
- Xylylene diisocyanate, in particular m-xylylene diisocyanate;
- and their mixtures.

4. Composition according to any one of Claims 1 to 3, **characterized in that** the aliphatic diisocyanate monomer is XDI or methylenebis(4-cyclohexyl isocyanate) (HMDI), the aliphatic diisocyanate monomer preferably being XDI.

5. Composition according to any one of Claims 1 to 4, **characterized in that** the ratio of the number of NCO groups present in the total amount of aliphatic diisocyanate monomer(s) used to synthesize the polyurethane prepolymer having NCO endings to the number of OH groups present in the total amount of diol(s) used to synthesize the polyurethane prepolymer having NCO endings, denoted r₁, ranges from 1.0 to 2.2.

6. Composition according to any one of Claims 1 to 5, **characterized in that** the molar ratio of the number of NCO groups present in the total amount of aliphatic diisocyanate monomer(s) used to synthesize the polyurethane prepolymer having NCO endings A) to the number of NCO groups present in the total amount of triisocyanate(s) based on XDI, denoted r₂, ranges from 3 to 11.

7. Composition according to any one of Claims 1 to 6, **characterized in that** the triisocyanate(s) based on XDI is (are) chosen from XDI isocyanurates, XDI biurets, adducts of XDI and of triols, and their mixtures, preferably chosen from adducts of XDI and of triols, such as, for example, the adduct of meta-xylylene diisocyanate and of trimethylolpropane.

8. Composition according to any one of Claims 1 to 7, **characterized in that** the polyester diol(s) and polyester polyol(s) exhibits (exhibit) a hydroxyl number (OHN) ranging from 28 to 112 mg KOH/g, preferably ranging from 28 to 90 mg KOH/g, preferentially ranging from 30 to 85 mg KOH/g, advantageously ranging from 34 to 85 mg KOH/g.

9. Composition according to any one of Claims 1 to 8, **characterized in that** the -OH component is a composition comprising a polyester diol, or a mixture of polyester diols.

10. Composition according to any one of Claims 1 to 9, **characterized in that** the content of NCO groups in the -NCO component ranges from 40 to 125 milliequivalents of NCO groups per 100 grams of solids content of -NCO component.

11. Composition according to any one of Claims 1 to 10, **characterized in that** the content of OH groups ranges from 70 to 100 milliequivalents of OH groups per 100 grams of solids content of -OH component.

12. Composition according to any one of Claims 1 to 11, **characterized in that** the -NCO and -OH components, which are intended to be mixed, are in amounts such that the ratio of the number of NCO groups present in the total amount of NCO component to the number of OH groups present in the total amount of OH component, denoted r₃, ranges from 2 to 15.

13. Multilayer structure comprising at least two layers of material bonded together by an adhesive layer, **characterized in that** said adhesive layer consists of the adhesive composition as defined in any one of Claims 1 to 12 obtained by mixing the -NCO and -OH components in the crosslinked state.

14. Multilayer structure according to the preceding claim, comprising at least one layer of aluminum-based material.

15. Process for the manufacture of a multilayer structure as defined in Claim 13 or 14, comprising the following stages:
(i) the mixing of the -NCO and -OH components, then
(ii) the coating of said mixture over the surface of a first layer of material, then
(iii) the laminating of the surface of a second layer of material over said coated surface, then
(iv) the crosslinking of said mixture.

16. Process according to the preceding claim, in which the mixing of the -NCO component and of the -OH component comprises at least one solvent and in which the process additionally comprises a stage of evaporation of the solvent or solvents.

17. Use of a multilayer structure as defined in Claim 13 or 14 in the manufacture of heat-sealable, sterilizable and/or pasteurizable flexible packagings.
